# EUROPÄISCHE PATENTSCHRIFT

(11) **EP 2 871 086 B1**
(45) Veröffentlichungstag und Bekanntmachung des Hinweises auf die Patenterteilung: **30.01.2019**
(21) Anmeldenummer: 14192220.3
(22) Anmeldetag: 07.11.2014
(51) Int. Cl.: B60J 7/16, B65D 88/12

(54) **Fahrzeug mit Abdeckvorrichtung für den Ladeaufbau**
Vehicle with cover device for the loading structure
Véhicule avec dispositif de toit ouvrant pour le plateau arrière

(30) Priorität: 08.11.2013 DE 202013105032 U
(43) Veröffentlichungstag der Anmeldung: 13.05.2015
(73) Patentinhaber: Fliegl sen., Josef, 84556 Kastl (DE)
(72) Erfinder: Fliegl jun., Josef, 84453 Mühldorf am Inn (DE)
(74) Vertreter: Tetzner, Michael

(56) Entgegenhaltungen:
- WO-A1-00/48929
- DE-B4-102007 043 818
- US-A1- 2006 208 526
- US-A1- 2007 236 042

## Beschreibung

Die Erfindung betrifft ein Fahrzeug mit einem durch Stirnwände und Seitenwände definierten, oben offenen Ladeaufbau und einer Abdeckvorrichtung, die den Ladeaufbau in einer Schließstellung verschließt und ihn in einer Öffnungsstellung freigibt.
Ein oben offener Ladeaufbau wird insbesondere für Schüttgüter, aber auch andere Güter verwendet, die von oben geladen werden können. Vielfach sind diese Güter jedoch feuchteempfindlich oder können leicht durch den Fahrtwind verweht werden. Es kommen daher vielfach Abdeckvorrichtungen zur Anwendung, die üblicherweise durch Schiebe- oder Rollplanen gebildet werden. Das Ziehen derartige Planen über die Ladeöffnung ist jedoch aufwendig, da sich der Mechanismus oft verkantet und/oder durch Ladegut behindert wird. Auf diese Weise kann bei überraschenden Regengüssen oder Hagelschauern wertvolle Zeit verloren gehen.

In der US 6,402,223 B2 wird zunächst eine aus zwei Dachsegmenten bestehende Abdeckvorrichtung als Stand der Technik beschrieben, die zwischen einer Schließstellung und einer Öffnungsstellung verschwenkbar ist, wobei jedes Dachsegment drehfest mit einer Antriebswelle im Bereich der oberen Längskanten der Seitenwände verbunden ist. Der Antrieb der Antriebswellen erfolgt über einen von Hand zu betätigenden Kettenantrieb. Dieser Schwenkmechanismus wird in der US 6,402,223 B2 aber als relativ mühsam und nachteilig angesehen, sodass als Alternative vorgeschlagen wird, die beiden Dachsegmente über jeweils vier Gelenkstangen zu betätigen, wobei jeweils zwei Gelenkstangen drehfest mit einer Antriebswelle verbunden sind.
Aus der US 2007/236042 A1 ist ein Fahrzeug mit einer Abdeckvorrichtung bekannt, die zwei Dachsegmente aufweist, die mit einem Zahnstangenantrieb geöffnet und geschlossen werden können.

Fahrzeuge mit einem angetriebenen Schwenkmechanismus für Dachsegmente gemäß dem Oberbegriff des Anspruchs 1 sind aus der US 2006/208526 A1 und der DE 10 2007 043 818 B4 bekannt.

Weiterhin ist aus der WO 00/48929 A1 ein Container mit zwei Abdecksegmenten bekannt, die mit Koppelelementen an Seitenwänden des Containers gehaltert sind. Die Abdecksegmente weisen Haken bzw. Hakenaufnahmen auf, die in der Schließstellung der beiden Abdecksegmente ineinandergreifen. Die Koppelelemente ermöglichen eine Verschiebung der Abdecksegmente zum Lösen der Haken von den Hakenaufnahmen und ein anschließendes Aufklappen der Abdecksegmente in eine Öffnungsstellung.

Der Erfindung liegt die Aufgabe zugrunde den Schwenkmechanismus dahingehend zu verbessern, dass die Abdeckvorrichtung den Laderaum in der Öffnungsstellung vollständig freigibt und sich in der Schließstellung durch den Schließmechanismus im Wesentlichen keine Verbreiterung des Fahrzeuges ergibt.

Erfindungsgemäß wird diese Aufgabe durch die Merkmale des Anspruches 1 gelöst.

Das erfindungsgemäße Fahrzeug weist einen durch Stirnwände und Seitenwände definierten, oben offenen Ladeaufbau und eine Abdeckvorrichtung auf, mit welcher der Ladeaufbau in einer Schließstellung verschlossen und in einer Öffnungsstellung freigegeben wird, wobei die Abdeckvorrichtung wenigstens ein Dachsegment umfasst, das mittels wenigstens einem Schwenkmechanismus zwischen der Schließstellung und der Öffnungsstellung verschwenkbar ist. Der Schwenkmechanismus weist wenigstens eine Antriebswelle auf, wobei das Dachsegment drehfest mit der Antriebswelle verbunden ist. Weiterhin ist ein Antrieb zum Drehen der Antriebswelle vorgesehen. Die Antriebswelle ist an wenigstens zwei Schwenkhebeln drehbar gehaltert, wobei die Schwenkhebel um eine gemeinsame Schwenkachse schwenkbar sind, sodass die Antriebswelle zwischen einer Position auf einer oberen Längskante eines der beiden Seitenwände in eine zur Seitenwand seitlich beabstandete Position gebracht wird und die gemeinsame Schwenkachse auf der oberen Längskante eines der beiden Seitenwände angeordnet ist.

Durch die Anordnung der gemeinsamen Schwenkachse auf der oberen Längskante der Seitenwand kann der Schwenkmechanismus so ausgebildet werden, dass er in der Schließstellung im Wesentlichen nicht über die Seitenwände übersteht und andererseits in der Öffnungsstellung den Ladeaufbau völlig freigibt. Die Länge des Schwenkhebels wird so dimensioniert, dass das Dachsegment in der Öffnungsstellung seitlich neben der zugehörigen Seitenwand vollständig abgeklappt werden kann, aber der Abstand zwischen Dachsegment und Seitenwand möglichst gering ist. Auf diese Weise ergibt sich eine sehr schlanke Konstruktion in geöffneten Zustand.

Weitere Ausgestaltungen der Erfindung sind Gegenstand der Unteransprüche.

Der Antrieb für die Antriebswelle umfasst vorzugsweise einen Zahnstangenantrieb mit einer Zahnstange, wobei die Zahnstange mit einem drehfest mit der Antriebswelle verbundenen Zahnrad zum Öffnen und Schließen des Dachsegments in Wirkverbindung steht. Dabei kann der Zahnstangenantrieb an seinem einen Ende über seine Zahnstange mit dem Zahnrad der Antriebswelle in Verbindung stehen und an seinem gegenüberliegenden Ende gelenkig im Bereich einer der Stirn- oder Seitenwände gehaltert sein. Zweckmäßigerweise weist der Antrieb einen doppeltwirkenden Betätigungszylinder zum Antrieb der Zahnstange auf.

Vorzugsweise befindet sich das wenigstens eine Dachsegment in der Öffnungsstellung seitlich neben einer der beiden Seitenwände. Weiterhin können zwei Dachsegmente vorgesehen, die in der Schließstellung nach Art eines Satteldachs angeordnet sind. Die beiden Dachsegmente können dabei auch teilweise überlappen. Ferner kann in diesem Fall auch jedem Dachsegment ein eigener Schwenkmechanismus zugeordnet werden.

Gemäß einer bevorzugten Ausgestaltung der Erfindung weist jeder Schwenkhebel an seinem einen Ende die gemeinsame Schwenkachse und an seinem anderen Ende eine hülsenartige Aufnahme für die Antriebswelle auf. Die Antriebswelle ist in dieser hülsenartige Aufnahme drehbar gelagert, wobei auch eine entsprechende Schmierung vorgesehen werden kann. Dabei kann die Antriebswelle in der hülsenartigen Aufnahme vorzugsweise in einem vorgegebenen, durch wenigstens einen Anschlag begrenzten Drehwinkelbereich von vorzugsweise zwischen 90° und 180° drehbar sein. Gemäß einer optionalen Ausgestaltung ist der Anschlag drehfest auf der Antriebswelle befestigt, wobei die relative Drehbewegung zwischen der Antriebswelle und der hülsenartigen Aufnahme durch eine in der hülsenartigen Aufnahme ausgebildeten Aussparung begrenzt wird. Des Weiteren kann die Schwenkbewegung der Antriebswelle zwischen der Öffnung- und Schließstellung durch elastische Pufferelemente begrenzt werden.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung des Ladeaufbaus in der Öffnungsstellung,
- Fig. 2: eine schematische Seitenansicht des Schwenkmechanismus in der Öffnungsstellung,
- Fig. 3: eine dreidimensionale Darstellung des Schwenkmechanismus gemäß Fig. 2,
- Fig. 4: eine dreidimensionale Detailansicht in der Öffnungsstellung,
- Fig. 5: eine Seitenansicht im Bereich des Schwenkmechanismus in einer ersten Zwischenstellung,
- Fig. 6: eine dreidimensionale Detailansicht in der ersten Zwischenstellung,
- Fig. 7: schematische Seitenansicht des Schwenkmechanismus in der Schließstellung,
- Fig. 8: eine dreidimensionale Detailansicht in der Schließstellung und
- Fig. 9: eine dreidimensionale Darstellung des Ladeaufbaus in der Schließstellung.

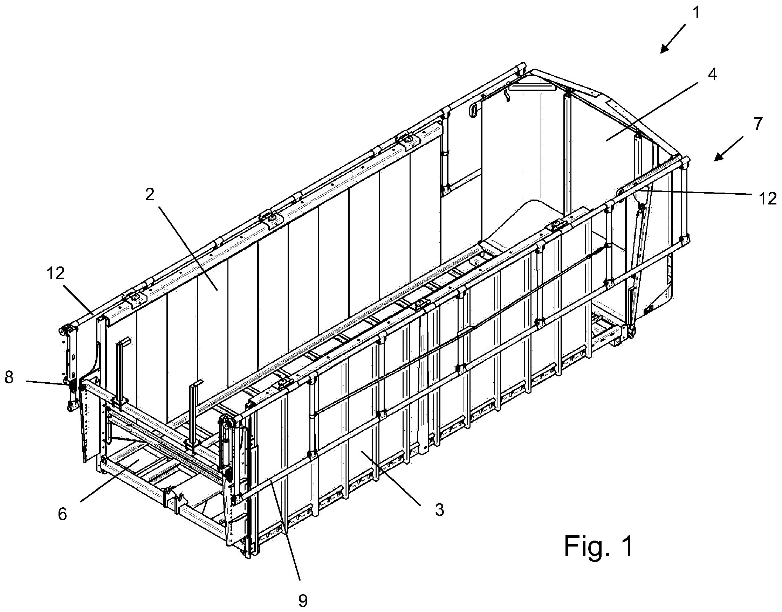

Der in Fig. 1 dargestellte Ladeaufbau 1 ist auf einem nicht näher dargestellten Fahrzeug, insbesondere einem Anhänger oder einem Lastkraftwagen, vorgesehen. Er besteht im Wesentlichen aus zwei Seitenwänden 2 und 3, einer hinteren Stirnwand 4, einer vorderen, nicht näher dargestellten Stirnwand und einem Boden 6. Der Ladeaufbau ist ferner oben offen ausgebildet, sodass er von oben mit Ladegut, beispielsweise mit landwirtschaftlichen Schnittgut oder anderen Gütern beladen werden kann. Die vordere Stirnwand kann beispielsweise als Schubwand ausgebildet sein. Auch der Boden 6 kann einen Schubboden aufweisen.

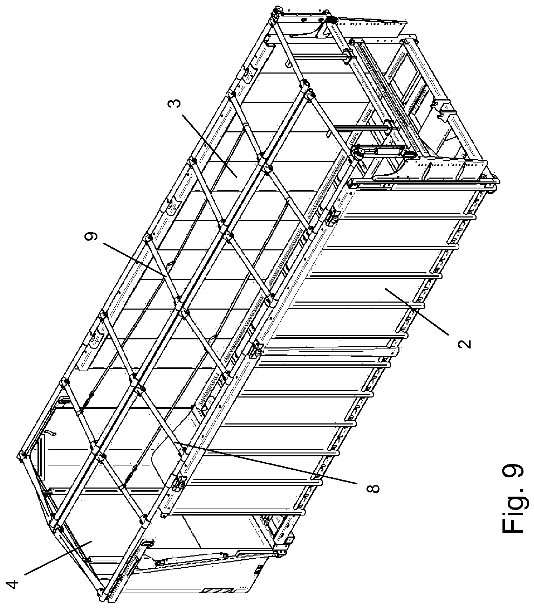

Zum Schutz der Ladung ist ferner eine Abdeckvorrichtung 7 vorgesehen, die zwei Dachsegmente 8, 9 und einen Schwenkmechanismus 10 umfasst. Die Dachsegmente weisen jeweils einen versteiften Rahmen auf, der mit einer nicht näher dargestellten Gewebeplane oder einer anderen, flächigen, zweckmäßigerweise aber leichten Abdeckung versehen ist. Die beiden Dachsegmente 8, 9 sind so angeordnet bzw. ausgebildet, dass sie in der Schließstellung gemäß Fig. 9 im Bereich der Längsmittelebene etwas überlappen, damit der Ladeaufbau auch in diesem Bereich vollkommen regendicht abgeschlossen ist.

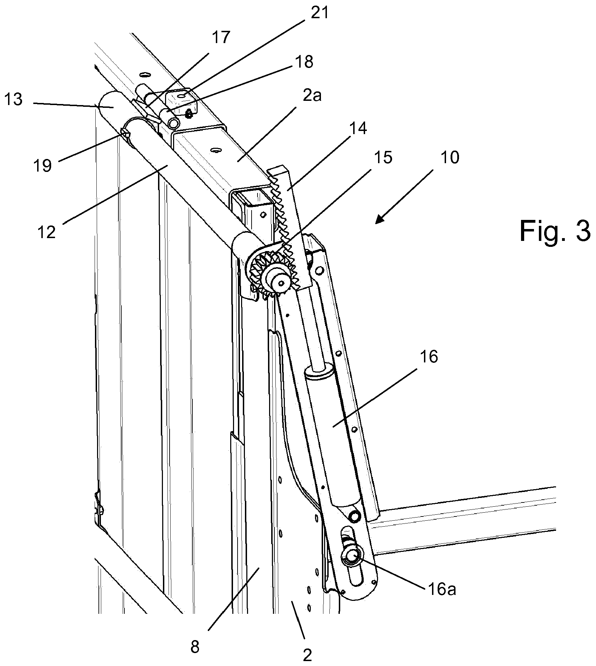

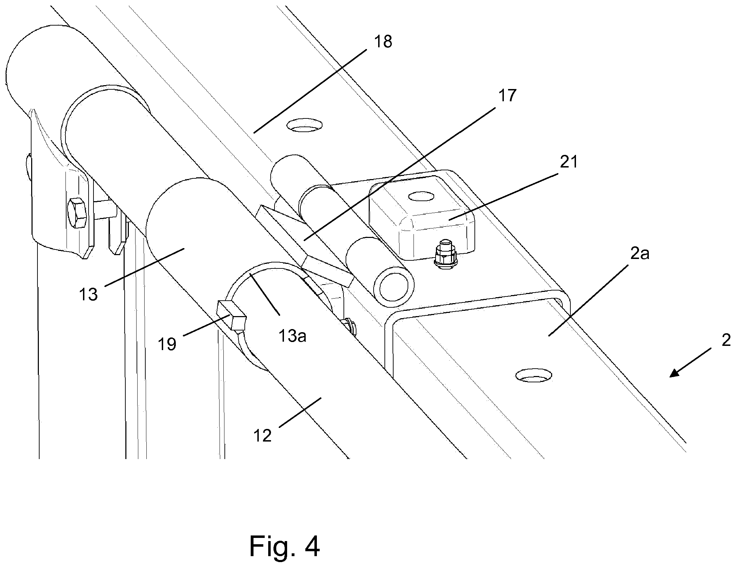

Jedes Dachsegment 8, 9 ist an seiner äußeren Längskante drehfest mit einer Antriebswelle 12 verbunden, die in hülsenartigen Aufnahmen 13 im Bereich der oberen Längskante jeder Seitenwand 2, 3 drehbar gelagert ist. Jede Antriebswelle 12 weist einen zugehörigen Schwenkmechanismus 10 auf, der einen Zahnstangenantrieb mit einer Zahnstange 14 umfasst, die mit einem drehfest mit der Antriebswelle 12 verbunden Zahnrad 15 zum Öffnen und Schließen des zugehörigen Dachsegments in Wirkverbindung steht (Fig. 3 und 4). Weiterhin ist ein doppeltwirkender Betätigungszylinder 16 vorgesehen, mit dem die Zahnstange 14 in beiden Richtungen bewegt werden kann. Der Betätigungszylinder 16 ist an einer Gelenkstelle 16a im Bereich der vorderen Stirnwand 5 gelenkig gelagert. Eine Bewegung der Zahnstange 14 bewirkt somit eine Drehung der Antriebswelle 12 und damit ein Öffnen bzw. Schließen des zugehörigen Dachsegments.

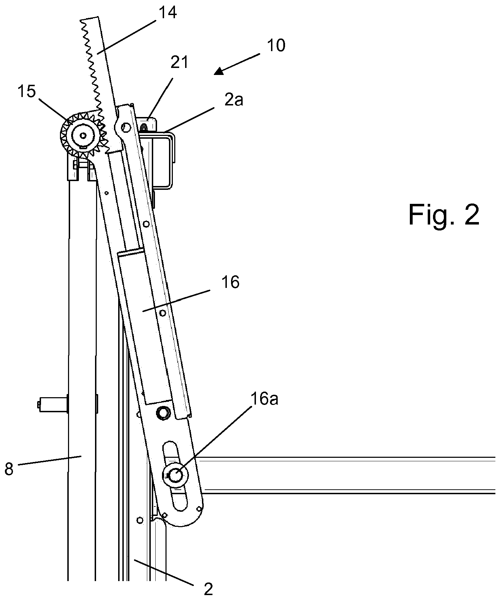

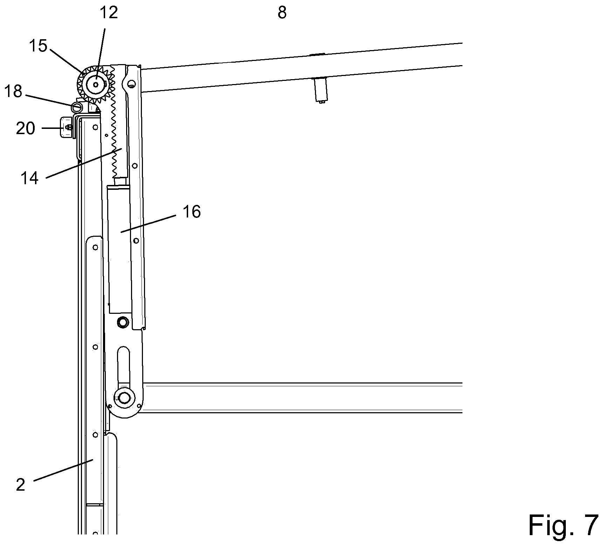

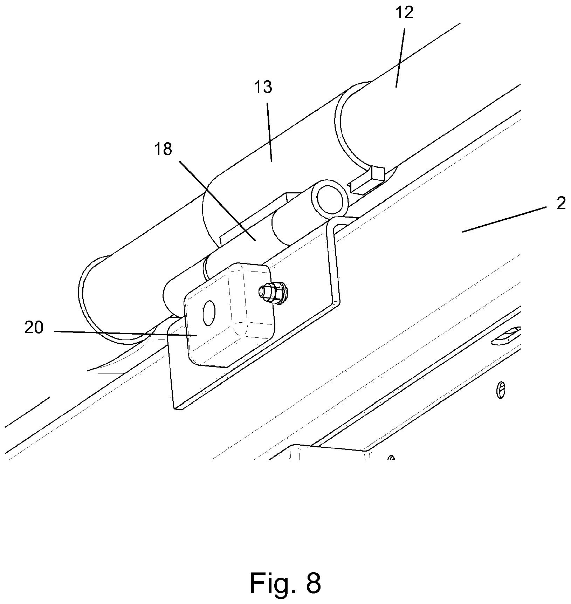

Die gelenkige Lagerung des Betätigungszylinders 16 ist deswegen erforderlich, weil die Antriebswelle 12 nicht ortsfest in den hülsenartigen Aufnahmen 13 gehaltert ist, sondern die Aufnahmen 13 an Schwenkhebeln 17 angeordnet sind, wie dies anhand der Fig. 3 und 4 ersichtlich ist. Die Schwenkhebel 17 können um eine Schwenkachse 18 schwenken, sodass die Antriebswelle 12 zwischen einer Position auf der oberen Längskante 2a der Seitenwand 2 (Fig. 7 und 8) in eine zur Seitenwand 2 seitlich beabstandete Position gemäß Fig. 2 bis 4 gebracht werden kann. Bei dem Schwenkhebel 17 handelt es sich somit quasi um eine Art Scharnier, das um die Schwenkachse 18 beweglich ist. Über die Länge der Seitenwand sind vorzugsweise wenigstens zwei derartige Schwenkhebel angeordnet. Der Schwenkhebel 17 ist somit mit einem Ende mit der Schwenkachse 18 verbunden und weist an seinem anderen Ende die hülsenartige Aufnehmung 13 für die Antriebsachse auf. Ein Schwenken des Schwenkhebels 17 bewirkt somit ein Schwenken der Antriebswelle 12. Die Antriebswelle 12 ist andererseits drehbar in der hülsenartige Aufnahme 13 angeordnet, wobei der Drehwinkelbereich durch einen drehfest mit der Antriebswelle 12 verbundenen Anschlag 19 begrenzt wird, indem die hülsenartige Aufnahme 13 eine Aussparung 13a (Fig. 4) aufweist, in welcher der Anschlag 19 begrenzt beweglich ist. Der relative Drehwinkelbereich den der Anschlag 19 in der Aussparung 13a ausführen kann, beträgt vorzugsweise mehr als 90°, aber weniger als 180°.

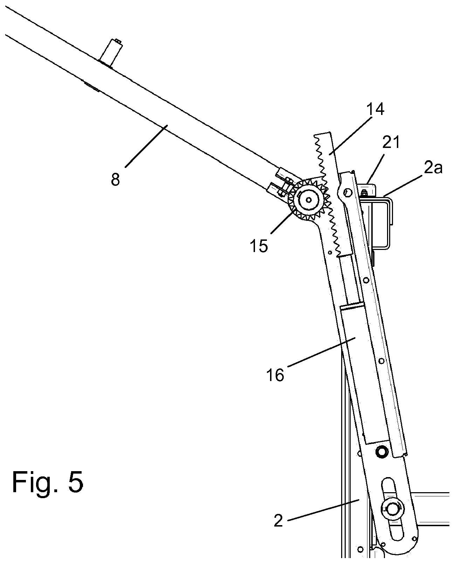

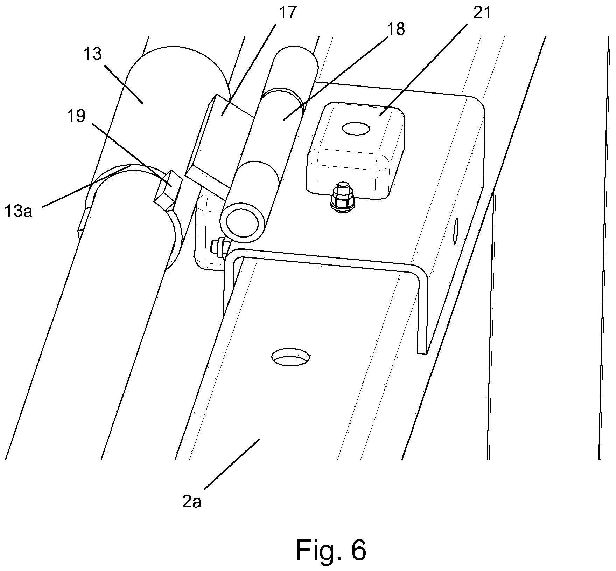

Um die Dachsegmente von der in den Fig. 1 bis 4 gezeigten Öffnungsstellung in die in Fig. 9 dargestellte Schließstellung zu bringen, muss der Betätigungszylinder 16, der in der Öffnungsstellung ausgefahren ist, eingefahren werden, wobei sich zunächst die Antriebswelle 12 in der hülsenartigen Aufnahme dreht, bis der Anschlag 19 von der in Fig. 4 gezeigten Stellung an der anderen Begrenzung der Ausnehmung 13a gemäß Fig. 6 anschlägt. Die Fig. 5 und 6 zeigen die sich dadurch ergebene Zwischenstellung des Dachsegments 8.

Wird der Betätigungszylinder 16 ausgehend von dieser Zwischenstellung noch weiter eingezogen nimmt der Anschlag 19 die hülsenartige Aufnahme 13 mit, sodass es zu einem Schwenken des Schwenkhebels 17 um seine Schwenkachse 18 kommt, bis die Schließstellung gemäß den Fig. 7 bis 9 erreicht ist. Zum Öffnen des Dachsegments wird der Betätigungszylinder in umgekehrter Richtung betätigt. Um in der Schließstellung und der Öffnungsstellung einen weichen Anschlag für die Dachsegmente zu gewährleisten, sind elastische Pufferelemente 20, 21 vorgesehen.

Aus den Fig. 1 bis 4 ist klar ersichtlich, dass der durch die Seitenwände begrenzte Laderaum in der Öffnungsstellung frei zugänglich ist und nicht durch den Schwenkmechanismus in irgendeiner Form eingeengt wird. Darüber hinaus wird die Antriebsachse 12 durch den Schwenkhebel 17 nur soweit nach außen geschwenkt, dass das Dachsegment 8 nach unten abgeschwenkt werden kann, wobei der Abstand zwischen Dachsegment 8 und Seitenwand 2 möglichst klein dimensioniert wird, um auch in der Öffnungsstellung eine möglichst schlanke Konstruktion zu haben.

Aus Fig. 7 ist zu ersehen, dass sich die Antriebsachse 12 in der Schließstellung der Dachsegmente in einer Position auf bzw. oberhalb der oberen Längskante 2a der Seitenwand 2 befindet und somit der Schwenkmechanismus im Wesentlichen nicht über die Seitenwände nach außen vorsteht. Im dargestellten Ausführungsbeispiel bildet das elastische Pufferelement 20 das äußerste Bauteil. Dies Element kann jedoch entsprechend schmal ausgebildet werden. Unter Umständen kann hierauf an dieser Stelle sogar verzichtet werden, indem beispielsweise ein entsprechendes Pufferelement am Dachsegment angebracht wird.

## Patentansprüche

1. Fahrzeug mit einem durch Stirnwände (4) und Seitenwände (2, 3) definierten, oben offenen Ladeaufbau und einer Abdeckvorrichtung (7), die den Ladeaufbau (1) in einer Schließstellung verschließt und ihn in einer Öffnungsstellung freigibt, wobei die Abdeckvorrichtung (7) wenigstens ein Dachsegment (8, 9) umfasst, das mittels wenigstens einem Schwenkmechanismus (10) zwischen der Schließstellung und der Öffnungsstellung verschwenkbar ist,
wobei der Schwenkmechanismus (10)
- wenigstens eine Antriebswelle (12) aufweist,
- das Dachsegment (8, 9) drehfest mit der Antriebswelle (12) verbunden ist und
- die Antriebswelle (12) mit einem Antrieb zum Drehen der Antriebswelle gekoppelt ist,
**dadurch gekennzeichnet, dass**
- die Antriebswelle an wenigstens zwei Schwenkhebeln (17) drehbar gehaltert ist, wobei die Schwenkhebel (17) um eine Schwenkachse (18) schwenkbar sind, sodass die Antriebswelle (12) zwischen einer Position auf einer oberen Längskante (2a) eines der beiden Seitenwände (2) in eine zur Seitenwand seitlich beabstandete Position gebracht wird und
- die Schwenkachse (18) auf der oberen Längskante (2a) eines der beiden Seitenwände (2) angeordnet ist.

2. Fahrzeug nach Anspruch 1, **dadurch gekennzeichnet, dass**, der Antrieb einen Zahnstangenantrieb mit einer Zahnstange (14) umfasst, wobei die Zahnstange (14) mit einem drehfest mit der Antriebswelle (12) verbundenen Zahnrad (15) zum Öffnen und Schließen des Dachsegments (8, 9) in Wirkverbindung steht.

3. Fahrzeug nach Anspruch 2, **dadurch gekennzeichnet, dass** der Zahnstangenantrieb an seinem einen Ende mit seiner Zahnstange (14) mit dem Zahnrad (15) der Antriebswelle (12) in Verbindung steht und an seinem gegenüberliegenden Ende gelenkig im Bereich einer der Stirn- oder Seitenwände (2, 3, 4) gehaltert ist.

4. Fahrzeug nach Anspruch 2 oder 3, **dadurch gekennzeichnet, dass** der Antrieb einen doppeltwirkenden Betätigungszylinder (16) zum Antrieb der Zahnstange (14) aufweist.

5. Fahrzeug nach einem oder mehreren der vorhergehenden Ansprüche, **dadurch gekennzeichnet, dass** sich das wenigstens eine Dachsegment (8, 9) in der Öffnungsstellung seitlich neben einer der beiden Seitenwände (2, 3) befindet.

6. Fahrzeug nach einem oder mehreren der vorhergehenden Ansprüche, **dadurch gekennzeichnet, dass** zwei Dachsegmente (8, 9) vorgesehen sind, die in der Schließstellung nach Art eines Satteldachs angeordnet sind.

7. Fahrzeug nach Anspruch 6, **dadurch gekennzeichnet, dass** sich die beiden Dachsegmente (8, 9) in der Schließstellung teilweise überlappen.

8. Fahrzeug nach einem oder mehreren der vorhergehenden Ansprüche 6 oder 7, **dadurch gekennzeichnet, dass** jedes Dachsegment (8, 9) einen eigenen Schwenkmechanismus (10) aufweist.

9. Fahrzeug nach einem oder mehreren der vorhergehenden Ansprüche, **dadurch gekennzeichnet, dass** jeder Schwenkhebel (17) an seinem einen Ende die Schwenkachse (18) und an seinem anderen Ende eine hülsenartige Aufnahme (13) für die Antriebswelle (12) aufweist.

10. Fahrzeug nach Anspruch 9, **dadurch gekennzeichnet, dass** die Antriebswelle (12) in der hülsenartigen Aufnahme (13) in einem vorgegebenen, durch wenigstens einen Anschlag (19) begrenzten Drehwinkelbereich drehbar ist.

11. Fahrzeug nach Anspruch 10, **dadurch gekennzeichnet, dass** der Anschlag drehfest auf der Antriebswelle (12) befestigt ist und die relative Drehbewegung zwischen der Antriebswelle (12) und der hülsenartigen Aufnahme (13) durch eine in der hülsenartigen Aufnahme (13) ausgebildeten Aussparung (13a) begrenzt wird.

12. Fahrzeug nach einem oder mehreren der vorhergehenden Ansprüche, **dadurch gekennzeichnet, dass** die Schwenkbewegung der Antriebswelle (12) zwischen der Öffnungs- und Schließstellung durch elastische Pufferelemente (20, 21) begrenzt wird.

## Claims

1. Vehicle with a load-carrying structure that is limited by end walls (4) and side walls (2, 3) and is open at the top and a cover system (7) to cover the load-carrying structure (1) when in closed position, and uncover it when in open position, with the cover system (7) comprising at least one roof segment (8, 9) that can be swivelled between closed position and open position using at least one swivel mechanism (10);
the swivel mechanism (10)
- has at least one drive shaft (12),
- the roof segment (8, 9) is rigidly attached to the drive shaft (12) and
- the drive shaft (12) is coupled with a drive to turn the drive shaft,
**characterised in that**
- the drive shaft is rotatably secured to at least two swivel levers (17), with the swivel lever (17) being able to be swivelled on a swivel axis (18), thus moving the drive shaft (12) between its position on the upper longitudinal edge (2a) of one of the two side walls (2) and a position that is laterally spaced from the side wall, and
- the swivel axis (18) is aligned with the upper longitudinal edge (2a) of one of the two side walls (2).

2. Vehicle as per claim 1, **characterised by** the fact that the drive comprises a rack and pinion drive with a toothed rack (14), with the toothed rack (14) being in effective connection with a toothed wheel (15) that is rigidly attached to the drive shaft (12) to open and close the roof segment (8, 9).

3. Vehicle as per claim 2, **characterised by** the fact that the rack and pinion drive is connected to the wheel (15) of the drive shaft (12) through its rack (14) at one end, and is flexibly secured in the region of one of the end or side walls (2, 3, 4) at the opposite end.

4. Vehicle as per claim 2 or 3, **characterised by** the fact that the drive has a double-action actuation cylinder (16) to drive the rack (14).

5. Vehicle as per one or more of the previous claims, **characterised by** the fact that at least one roof segment (8, 9) sits beside one of the two side walls (2, 3) when in open position.

6. Vehicle as per one or more of the previous claims, **characterised by** the fact that two roof segments (8, 9) are provided, arranged like a type of pitched roof when in closed position.

7. Vehicle as per claim 6, **characterised by** the fact that the two roof segments (8, 9) partially overlap when in closed position.

8. Vehicle as per one or more of the previous claims 6 or 7, **characterised by** the fact that each roof segment (8, 9) has its own swivel mechanism (10).

9. Vehicle as per one or more of the previous claims, **characterised by** the fact that each swivel lever (17) has the swivel axis (18) at one end and a sleeve-like mount (13) for the drive shaft (12) at the other end.

10. Vehicle as per claim 9, **characterised by** the fact that the drive shaft (12) can be turned in the sleeve-like mount (13) within a set rotational range, limited by at least one end stop (19).

11. Vehicle as per claim 10, **characterised by** the fact that the end stop is rigidly attached to the drive shaft (12), and that the relative rotatory movement between the drive shaft (12) and the sleeve-like mount (13) is limited by a recess (13a) in the sleeve-like mount (13).

12. Vehicle as per one or more of the previous claims, **characterised by** the fact that the swivelling movement of the drive shaft (12) between open and closed position is limited by flexible buffer elements (20, 21).

## Revendications

1. Véhicule comprenant une structure de chargement ouverte vers le haut et définie par des parois frontales (4) et par des parois latérales (2, 3), et comprenant un dispositif de couverture (7) qui, dans une position de fermeture, ferme la structure de chargement (1) et, dans une position d'ouverture, dégage ladite structure de chargement, où le dispositif de couverture (7) comprend au moins un segment de toit (8, 9) qui, au moyen au moins d'un mécanisme de pivotement (10), peut pivoter entre la position de fermeture et la position d'ouverture,
où le mécanisme de pivotement (10)
- présente au moins un arbre d'entraînement (12),
- le segment de toit (8, 9) est relié à l'arbre d'entraînement (12) en étant solidaire en rotation de celui-ci,
- l'arbre d'entraînement (12) est couplé à un entraînement servant à la rotation de l'arbre d'entraînement,
**caractérisé**
- **en ce que** l'arbre d'entraînement est supporté en rotation sur au moins deux leviers de pivotement (17), où les leviers de pivotement (17) peuvent pivoter autour d'un axe de pivotement (18), de sorte que l'arbre d'entraînement (12) est déplacé, passant d'une position située sur un bord longitudinal supérieur (2a) de l'une des deux parois latérales (2), à une position espacée latéralement de la paroi latérale, et
- **en ce que** l'axe de pivotement (18) est disposé sur le bord longitudinal supérieur (2a) de l'une des deux parois latérales (2).

2. Véhicule selon la revendication 1, **caractérisé en ce que** l'entraînement comprend un mécanisme de commande à crémaillère comportant une crémaillère (14), où la crémaillère (14) est en liaison fonctionnelle active avec une roue dentée (15) reliée à l'arbre d'entraînement (12) en étant solidaire en rotation de celui-ci, ladite roue dentée servant à l'ouverture et à la fermeture du segment de toit (8, 9).

3. Véhicule selon la revendication 2, **caractérisé en ce que** le mécanisme de commande à crémaillère, au niveau de l'une de ses extrémités, est en liaison, par sa crémaillère (14), avec la roue dentée (15) de l'arbre d'entraînement (12), et, au niveau de son extrémité opposée, ledit mécanisme de commande à crémaillère est supporté de manière articulée dans la zone de l'une des parois frontales ou latérales (2, 3, 4).

4. Véhicule selon la revendication 2 ou 3, **caractérisé en ce que** l'entraînement présente un vérin de commande (16) à double effet servant à l'entraînement de la crémaillère (14).

5. Véhicule selon l'une quelconque ou plusieurs des revendications précédentes, **caractérisé en ce que** le segment de toit (8, 9) au moins au nombre de un, quand il est dans la position d'ouverture, se trouve placé latéralement à côté de l'une des deux parois latérales (2, 3).

6. Véhicule selon l'une quelconque ou plusieurs des revendications précédentes, **caractérisé en ce qu'**il est prévu deux segments de toit (8, 9) qui, dans la position de fermeture, sont disposés à la façon d'un toit à deux versants.

7. Véhicule selon la revendication 6, **caractérisé en ce que** les deux segments de toit (8, 9) se chevauchent partiellement dans la position de fermeture.

8. Véhicule selon l'une quelconque ou plusieurs des revendications précédentes 6 ou 7, **caractérisé en ce que** chaque segment de toit (8, 9) présente un propre mécanisme de pivotement (10).

9. Véhicule selon l'une quelconque ou plusieurs des revendications précédentes, **caractérisé en ce que** chaque levier de pivotement (17), au niveau de l'une de ses extrémités, présente l'axe de pivotement (18), et, au niveau de son autre extrémité, présente un logement (13), en forme de manchon, pour l'arbre d'entraînement (12).

10. Véhicule selon la revendication 9, **caractérisé en ce que** l'arbre d'entraînement (12) est en rotation, dans le logement (13) en forme de manchon, suivant une plage angulaire de rotation prédéfinie et limitée par au moins une butée (19).

11. Véhicule selon la revendication 10, **caractérisé en ce que** la butée est fixée sur l'arbre d'entraînement (12) en étant solidaire en rotation, et le mouvement de rotation relatif se produisant entre l'arbre d'entraînement (12) et le logement (13) en forme de manchon est limité par un évidement (13a) formé dans le logement (13) en forme de manchon.

12. Véhicule selon l'une quelconque ou plusieurs des revendications précédentes, **caractérisé en ce que** le mouvement de pivotement de l'arbre d'entraînement (12) se produisant entre la position d'ouverture et de fermeture est limité par des éléments tampons (20, 21) élastiques.
